**Europäisches Patentamt**

**European Patent Office**

**Office européen des brevets**

(11) Veröffentlichungsnummer: **0 030 708**
**A1**

(12) **EUROPÄISCHE PATENTANMELDUNG**

(21) Anmeldenummer: **80107784.3**

(22) Anmeldetag: **10.12.80**

(51) Int. Cl.³: **H 04 Q 7/04**
**H 04 M 11/02**

(30) Priorität: **14.12.79 DE 2950387**

(43) Veröffentlichungstag der Anmeldung:
**24.06.81 Patentblatt 81/25**

(84) Benannte Vertragsstaaten:
**AT BE CH DE FR GB IT LI LU NL SE**

(71) Anmelder: **SIEMENS AKTIENGESELLSCHAFT Berlin
und München**
**Postfach 22 02 61**
**D-8000 München 22(DE)**

(72) Erfinder: **Wirth, Roland, Dipl.-Ing.**
**Bergstrasse 20**
**D-8035 Gauting(DE)**

(54) **Vermittlungssystem mit Personensuchfunktion.**

(57) Die Erfindung betrifft ein Vermittlungssystem mit Personensuchfunktion mit einem Netz von Sprechstellen und einem über Draht mit den Sprechstellen verbundenen, an Steuereinrichtungen angeschlossenen Leitungsnetz. Erfindungsgemäß sind auf eine individuelle Kennung reagierende, drahtlose Teilnehmergeräte (A, B ...Z) vorgesehen mit einem selektiv abgestimmten Funk-/Empfangsteil und mit elektromagnetischen, optischen oder akustischen Sende-/Empfangseinrichtungen. Diese treten mit entsprechenden Sende-/Empfangseinrichtungen in den anonymen (nummernlosen) Sprechstellen (SP), die sternförmig über das Leitungsnetz an ein Koppelnetz (K) mit Steuereinrichtungen (Steuerzentrale) (SZ) angeschlossen sind, in Funk-, optische oder akustische Verbindung. Bei einem von der Steuerzentrale veranlaßten Suchruf eines rufenden Teilnehmers wird eine automatische Rückmeldung des gerufenen Teilnehmers von der ihm nächstgelegenen Sprechstelle (SP) an die Steuerzentrale (SZ) veranlaßt. Die Steuerzentrale (SZ) bewirkt dann einen Verbindungsaufbau vom gerufenen Teilnehmer zu einem vom rufenden Teilnehmer vorgewählten Verbindungspunkt (X) im Koppelnetz (K).

SIEMENS AKTIENGESELLSCHAFT     Unser Zeichen
Berlin und München            VPA  79 P 6 7 2 8 EUR

Vermittlungssystem mit Personensuchfunktion

Die Erfindung bezieht sich auf ein Vermittlungssystem mit Personensuchfunktion mit einem Netz von Sprechstellen und einem über Draht mit den Sprechstellen verbundenen, an Steuereinrichtungen angeschlossenen Leitungsnetz.

Personensuchsysteme sind üblicherweise so ausgebildet, daß die betreffenden Teilnehmer einen Personensuchempfänger (Selektivrufempfänger) mit sich führen und durch einen Suchruf zum manuellen Rückruf des rufenden Teilnehmers über ein Vermittlungssystem herkömmlicher Art aufgefordert werden.

Der Erfindung liegt die Aufgabe zugrunde, in einem vollautomatisch vermittelnden drahtgebundenen Netz die Mobilität der Teilnehmer zu erhalten.

Diese Aufgabe wird bei einem Vermittlungssystem der eingangs beschriebenen Art gemäß der Erfindung in der Weise gelöst, daß auf eine individuelle Kennung reagierende, drahtlose Teilnehmergeräte vorgesehen sind mit einem selektiv abgestimmten Funk-/Empfangsteil und mit elektromagnetischen, optischen oder akustischen Sende-/Empfangseinrichtungen, die mit entsprechenden Sende-/Empfangseinrichtungen in den jeweiligen anonymen (nummernlosen) Sprechstellen, die sternförmig über das Leitungsnetz an ein Koppelnetz mit Steuereinrichtungen angeschlossen sind, in Funk-, optische oder akustische Verbindung treten und bei einem von

Klu 1 Mai / 13.12.79

den Steuereinrichtungen (Steuerzentrale) veranlaßten
Suchruf (z.B. Funkruf) eines rufenden Teilnehmers eine
automatische Rückmeldung des gerufenen Teilnehmers
von der ihm nächstgelegenen Sprechstelle an die Steuerzentrale veranlassen, die einen Verbindungsaufbau vom
gerufenen Teilnehmer zu einem vom rufenden Teilnehmer
vorgewählten Verbindungspunkt im Koppelnetz bewirkt.

Das Grundprinzip dieses Vermittlungssystems besteht
dabei darin, daß sich Teilnehmer mit tragbaren Geräten
zwischen einer  größeren Anzahl anonymer Sprechstellen
(ohne Teilnehmernummern) bewegen, die sternförmig
über ein Leitungsnetz an ein Koppelnetz mit Steuereinrichtungen (Steuerzentrale) angeschlossen sind.
Die Geräte können einerseits ein beispielsweise großflächig von der Steuerzentrale ausgestrahltes Signal
empfangen und sind andererseits in der Lage, auf kurze
Distanz automatisch mit der nächstgelegenen anonymen
Sprechstelle in Verbindung zu treten und damit einen
Verbindungsaufbau zum Treffen mit dem rufenden Teilnehmer einzuleiten.

Vorteilhafte Ausgestaltungen und Weiterbildungen des
Erfindungsgegenstandes sind in den Unteransprüchen
angegeben.

Nachstehend wird die Erfindung anhand eines in der
Zeichnung dargestellten Ausführungsbeispiels, das ein
Vermittlungssystem mit Funkruf zeigt, näher erläutert.

Das Vermittlungssystem besteht aus einem Koppelnetz K
mit einer Vielzahl von Leitungen, die an eine Steuerzentrale SZ angeschlossen sind.An diese Leitungen
sind über Drahtverbindungen die einzelnen anonymen
Sprechstellen SP anschaltbar. Im Verbindungsweg zwischen den Sprechstellen SP und dem Koppelnetz K
sind Auswähleinrichtungen W eingeschaltet, die beispielsweise aus Koppelschaltern oder Synthesizern bestehen. Über diese Auswähleinrichtungen W erfolgt die
Auswahl einer Leitung des Koppelnetzes K, mit der die
betreffende Sprechstelle SP verbunden wird. Das Koppelnetz ist dabei auch als Koppelfeld realisierbar
oder in jeder anderen Weise, die entweder für eine
galvanische Verbindung der Sprechstellen mit den an
die Steuerzentrale angeschlossenen Leitungen des Koppelnetzes geeignet ist, oder aber - im Falle eines
reinen Funksystemes - eine Funkverbindung über einen
von mehreren von der Steuerzentrale verwalteten Funkkanal ermöglicht.

Die einzelnen Teilnehmer A,B...Z bewegen sich mit
ihren Teilnehmergeräten in dem Netz der fest verdrahteten, anonymen, d.h. nummernlosen Sprechstellen SP.
Jedes Teilnehmergerät ist mit einer speziellen Kennung
versehen. Es enthält jeweils einen selektiv auf diese
Kennung ansprechenden Funk-Empfangsteil und elektromagnetische, optische oder akustische Sende-/Empfangseinrichtungen für kurze Reichweiten. Entsprechende
Sende-/Empfangseinrichtungen für kurze Reichweiten
sind in den jeweiligen Sprechstellen SP vorgesehen.

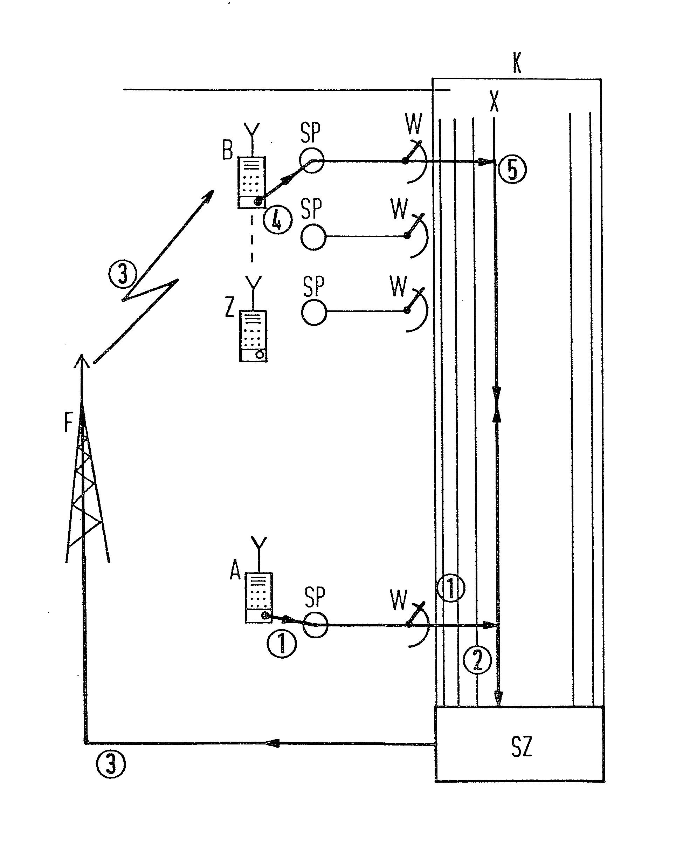

Die Steuerzentrale SZ verfügt über eine Funkeinrichtung, in der Figur dargestellt durch einen Sendemast F,
die über einen einzigen Datenkanal, z.B. VHF- oder UHF-
Kanal die im großflächigen Vermittlungsbereich befindlichen Teilnehmer mit Teilnehmergeräten erreichen kann.

Für die nachfolgende Erläuterung des Verbindungsaufbaus wurden in der Figur Ziffern und Pfeile eingetragen, die die einzelnen Schritte markieren. Will der Teilnehmer A eine Sprechverbindung zum Teilnehmer B haben, so belegt er beispielsweise über eine im Infrarotbereich liegende Verbindung, also eine optische Verbindung, die ihm nächstgelegene Sprechstelle SP und eine freie Leitung X (Treffpunkt) - Schritt 1. Die Steuerzentrale SZ nimmt den über eine Tastatur eingegebenen Verbindungswunsch von Teilnehmer A auf - Schritt 2. Dabei erfolgt seitens der Steuerzentrale SZ eine Identifikation sowohl des Teilnehmers A auf dem von ihm belegten Treffpunkt X, als auch des Gesprächswunsches zum Teilnehmer B. Die Steuerzentrale SZ veranlaßt nun einen Funkruf mit der Treffinformation X an den Teilnehmer B, bei der auch die Kennung des rufenden Teilnehmers mit übertragen werden kann, damit zumindest eine Personensuchfunktion in bisher bekannter Weise ermöglicht wird, falls sich der gerufene Teilnehmer zwar im Funk-Bereich des Vermittlungskanales der Steuerzentrale befindet, aber momentan zu keiner anonymen Sprechstelle Verbindung hat - Schritt 3. Das Teilnehmergerät beim Teilnehmer B erkennt seinen individuellen Ruf und belegt automatisch, beispielsweise mit einem Infrarot-Sender, die nächstgelegene Sprechstelle SP - Schritt 4. Dabei kann zusammen mit der Wiederholung der von der Steuerzentrale SZ empfangenen Treffinformation die eigene Identifikation des Teilnehmers B zur Sprechstelle übertragen werden, von der aus die gesamte Information an die Steuerzentrale SZ weitergegeben wird. Mit der empfangenen Treffinformation wird von der Steuerzentrale SZ der Verbindungsaufbau zwischen den beiden Teilnehmern vorgenommen - Schritt 5. Der Sprechweg besteht dabei aus den drahtlosen Verbindungen zwischen dem jeweiligen Teilnehmergerät und den Sprechstellen und dem Drahtnetz zwischen den jeweiligen Sprechstellen und dem Koppelnetz zum Verbindungspunkt im Koppelnetz (Treffpunkt Leitung X).

Das erfindungsgemäße Vermittlungssystem ist in seinem
Aufbau sehr einfach und somit kostengünstig. Bereits
vorhandene Teilnehmer-Drahtnetze herkömmlicher Vermittlungsanlagen können in vorteilhafter Weise zum Anschluß
der anonymen Sprechstellen an das Koppelnetz verwendet werden. Es gewährleistet eine große Mobilität der
Teilnehmer im drahtgebundenen Netz, wobei weder für
die Teilnehmerzahl noch für das Operationsgebiet im
Prinzip Grenzen gesetzt sind. Hinsichtlich der Möglichkeiten sind beispielsweise Konferenzschaltungen zwischen beliebig vielen Teilnehmern auf einfache Weise
realisierbar. Hinsichtlich des Frequenzaufwandes ist
das erfindungsgemäße Vermittlungssystem sehr wirtschaftlich, da lediglich ein einziger Funkkanal zur
Vermittlung im gesamten Netz erforderlich ist, während
die Gespräche beispielsweise über Infrarotverbindungen
und das Drahtnetz geführt werden. Durch die Übertragung des Datenkanals im Rundfunk- oder Fernsehband
(z.B. Bild- oder Zeilenaustastlücke), könnten großflächig versorgende Systeme dieser Art aufgebaut werden. Der gerufene Teilnehmer ist bei diesem System
aktiv am Verbindungsaufbau beteiligt, wobei in dem
Netz der anonymen Sprechstellen das entscheidende
Vermittlungskriterium frei wählbare Teilnehmer-Kennungen sind (z.B. identisch mit der Paßnummer), die
auf einem netzeinheitlichen Rufkanal übertragen werden. Das System arbeitet als vollautomatisches Sofortvermittlungssystem und benötigt dabei weder Dateien
noch Funksprechkanäle, wobei allerdings auch eine
reine Funkversion denkbar ist, bei der die Treffpunkte des Koppelnetzes Sprechkanalfrequenzen darstellen, die durch die Steuerzentrale verwaltet und mit Synthesizern anstelle der Auswähleinrichtungen W eingestellt werden.

Bei fehlendem Funkkanal kann die Suchfunktion des Vermittlungssystems in der Weise realisiert werden, daß eine Parallelansteuerung aller anonymen Sprechstellen unter Ausnutzung des Leitungsnetzes der anonymen Sprechstellen als Antenne oder über ein Schleifensystem (Loop-System) erfolgt oder die Sende-/Empfangseinrichtungen aller anonymen Sprechstellen parallel angesteuert werden.

13 Patentansprüche
 1 Figur

Patentansprüche

1. Vermittlungssystem mit Personensuchfunktion mit einem Netz von Sprechstellen und einem über Draht mit den Sprechstellen verbundenen, an Steuereinrichtungen angeschlossenen Leistungsnetz, d a d u r c h   g e - k e n n z e i c h n e t , daß auf eine individuelle Kennung reagierende, drahtlose Teilnehmergeräte vorgesehen sind mit einem selektiv abgestimmten Funk-/ Empfangsteil und mit elektromagnetischen, optischen oder akustischen Sende-/Empfangseinrichtungen, die mit entsprechenden Sende-/Empfangseinrichtungen in den jeweiligen anonymen (nummernlosen) Sprechstellen, die sternförmig über das Leitungsnetz an ein Koppelnetz mit Steuereinrichtungen angeschlossen sind, in Funk-, optische oder akustische Verbindung treten und bei einem von den Steuereinrichtungen (Steuerzentrale) veranlaßten Suchruf (z.B. Funkruf) eines rufenden Teilnehmers eine automatische Rückmeldung des gerufenen Teilnehmers von der ihm nächstgelegenen Sprechstelle an die Steuerzentrale veranlassen, die einen Verbindungsaufbau vom gerufenen Teilnehmer zu einem vom rufenden Teilnehmer vorgewählten Verbindungspunkt im Koppelnetz bewirkt.

2. Vermittlungssystem nach Anspruch 1, d a d u r c h g e k e n n z e i c h n e t ,  daß die Sende-/Empfangs- einrichtungen der Teilnehmergeräte und der Sprechstellen für Duplex-Sprachübertragung ausgebildet sind.

3. Vermittlungssystem nach Anspruch 1 oder 2, d a - d u r c h   g e k e n n z e i c h n e t , daß der Suchruf über einen einzigen Funkdatenkanal (z.B. VHF- oder UHF-Kanal) erfolgt.

4. Vermittlungssystem nach Anspruch 1 oder 2, d a -
d u r c h   g e k e n n z e i c h n e t , daß der
Suchruf durch Parallelansteuerung der anonymen Sprechstellen unter Ausnutzung des Leitungsnetzes der
anonymen Sprechstellen als Antenne erfolgt.

5. Vermittlungssystem nach Anspruch 1 oder 2, d a -
d u r c h   g e k e n n z e i c h n e t , daß der
Suchruf durch Parallelansteuerung der anonymen Sprechstellen über ein Schleifensystem erfolgt.

6. Vermittlungssystem nach Anspruch 1 oder 2, d a -
d u r c h   g e k e n n z e i c h n e t , daß der
Suchruf durch Parallelansteuerung der Sende-/Empfangseinrichtungen (z.B. Infrarot) in den anonymen Sprechstellen erfolgt.

7. Vermittlungssystem nach Anspruch 3, d a d u r c h
g e k e n n z e i c h n e t , daß der Funkdatenkanal
(Organisationskanal) Informationen über den gerufenen
Teilnehmer, den rufenden Teilnehmer und dessen vorgewählten Verbindungspunkt (Treffpunkt) im Koppelnetz
enthält.

8. Vermittlungssystem nach einem der Ansprüche 1 bis 7,
d a d u r c h   g e k e n n z e i c h n e t , daß
das Koppelnetz als Koppelfeld ausgebildet ist.

9. Vermittlungssystem nach einem der Ansprüche 1 bis 7,
d a d u r c h   g e k e n n z e i c h n e t , daß
im Verbindungsweg zwischen den Sprechstellen und dem
Koppelnetz angeordnete Auswähleinrichtungen als Koppelschalter ausgebildet sind.

10. Vermittlungssystem nach einem der Ansprüche 1 bis 7, d a d u r c h   g e k e n n z e i c h n e t , daß im Verbindungsweg zwischen den Sprechstellen und dem Koppelnetz angeordnete Auswähleinrichtungen als Synthesizer für Frequenzwahl ausgebildet sind.

11. Vermittlungssystem nach einem der Ansprüche 1 bis 10, d a d u r c h   g e k e n n z e i c h n e t , daß die Verbindung zwischen Teilnehmergeräten und Sprechstellen über Lichtstrahlung z.B. im Infrarotbereich erfolgt.

12. Vermittlungssystem nach einem der vorhergehenden Ansprüche, d a d u r c h   g e k e n n z e i c h - n e t , daß der Funkdatenkanal zusammen mit Rundfunk- oder Fernsehsendungen übertragen wird.

13. Vermittlungssystem nach einem der vorhergehenden Ansprüche, g e k e n n z e i c h n e t   d u r c h die verzögerungsfreie Zusammenschaltung von beliebig vielen Konferenz-Teilnehmern.

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 2 056 093 (TEKADE FELTEN & GUILLEAUME) <br><br> * Seite 1, Zeile 1 bis Seite 3, Zeile 27; Abbildung * <br><br> --- | 1-3, 7, 8 |
| | US - A - 3 588 371 (DAL MONTE) <br><br> * Spalte 1, Zeile 45 bis Spalte 4, Zeile 14; Abbildungen 1-3 * <br><br> --- | 1-3, 7-9 |
| | DE - A - 2 228 327 (TEKADE FELTEN & GUILLEAUME) <br><br> * Seite 2, Zeile 30 bis Seite 3, Zeile 27; Seite 3, Zeile 35 bis Seite 6, Zeile 12; Abbildung * <br><br> --- | 1, 2, 4, 6-8 |
| | ELECTRICAL COMMUNICATION, Band 43, Heft 4, 1968 London (GB) J.J.MULLER: "STAMP Automatic Mobile Public Telephone System", Seiten 301 bis 312 <br><br> * Seite 304, rechte Spalte, Zeile 51 bis Seite 305, rechte Spalte, Zeile 4; Abbildung 6 * <br><br> --- | 1, 2, 5 |
| | DE - A - 1 512 871 (ISEC) <br><br> * Seite 6, Zeile 1 bis Seite 10, Zeile 7; Abbildung 1 * <br><br> --- | 1, 10 |

### KLASSIFIKATION DER ANMELDUNG (Int. Cl.³)

H 04 Q 7/04
H 04 M 11/02

### RECHERCHIERTE SACHGEBIETE (Int. Cl.³)

H 04 Q 7/02
H 04 Q 7/04
H 04 M 1/72
H 04 M 11/02
H 04 B 5/02
H 04 B 7/26
G 08 B 3/10

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt

| Recherchenort | Abschlußdatum der Recherche | Prüfer |
|---|---|---|
| Den Haag | 27-02-1981 | WOLF |

EPA form 1503.1    06.78

BAD ORIGINAL

| | Europäisches Patentamt | **EUROPÄISCHER RECHERCHENBERICHT** | Nummer der Anmeldung EP 80 10 7784 |

| | **EINSCHLÄGIGE DOKUMENTE** | | **KLASSIFIKATION DER ANMELDUNG (Int. Cl.³)** |
|---|---|---|---|
| Kategorie | Kennzeichnung des Dokuments mit Angabe, soweit erforderlich, der Maßgeblichen Teile | betrifft Anspruch | |
| | DE - A - 2 341 971 (LICENTIA PATENT-VERWALTUNGS) <br><br> * Seite 4, Zeile 13 bis Seite 7, Zeile 19; Abbildungen 1 und 2 * <br><br> --- | 1-3, 5 | |
| | DE - A - 1 566 826 (TELEFUNKEN) <br><br> * Seite 4, Zeilen 3 bis 21; Abbildung * <br><br> --- | 1,2,8, 9 | |
| | US - A - 4 119 800 (GIRARDI) <br><br> * Spalte 6, Zeilen 7 bis 14; Spalte 11, Zeile 38 bis Spalte 12, Zeile 8 * <br><br> --- | 1,10 | **RECHERCHIERTE SACHGEBIETE (Int. Cl.³)** |
| | DE - A - 2 823 931 (SIEMENS) <br><br> * Seite 13, Zeile 30 bis Seite 14, Zeile 31; Abbildung 1 * <br><br> --- | 11 | |
| | GB - A - 1 548 145 (STC) <br><br> * Seite 1, Zeile 57 bis Seite 2, Zeile 50 * <br><br> --- | 11 | |
| | DE - A - 2 421 562 (RANK) <br><br> * Seite 2, Zeilen 10 bis 22; Seite 6, Zeile 14 bis Seite 7, Zeile 25; Abbildungen 1-3* <br><br> --- | 3,12 <br><br> ./. | |

**0030708**

| | EINSCHLÄGIGE DOKUMENTE | | KLASSIFIKATION DER ANMELDUNG (Int Cl.³) |
|---|---|---|---|
| Kategorie | Kennzeichnung des Dokuments mit Angabe, soweit erforderlich, der Maßgeblichen Teile | betrifft Anspruch | |
| | TELE, Band 22, Heft 2, 1970 FARSTA (SE) O. MAKITALO u.a.: "New System for Radio Paging over the FM Broadcasting Network", Seiten 100 bis 105<br><br>* Seite 100, Zeilen 1 bis 9; Seite 100, Zeile 38 bis Seite 101, linke Spalte, Zeile 20; Abbildung 1 *<br><br>--- | 3,12 | |
| | IEEE INTERNATIONAL CONFERENCE ON COMMUNICATIONS", 11-13 Juni 1973 NEW YORK (US) Z.C. FLUHR u.a.: "Switching Plan for a Cellular Mobile Telephone System", Seiten 19-26 bis 19-32<br><br>* Seiten 19-30, Zeilen 1 bis 24; Abbildung 10 *<br><br>--- | 13 | RECHERCHIERTE SACHGEBIETE (Int. Cl.³) |
| | US – A – 3 358 233 (REINDL)<br><br>* Zusammenfassung *<br><br>---------- | 13 | |

EPA Form 150J.2   06.78